# EUROPÄISCHE PATENTSCHRIFT

(11) **EP 1 243 092 B1**
(45) Veröffentlichungstag und Bekanntmachung des Hinweises auf die Patenterteilung: **23.11.2005**
(21) Anmeldenummer: 00991102.5
(22) Anmeldetag: 19.12.2000
(51) Int. Cl.: H04J 14/08, H04L 7/00

(54) **VERFAHREN ZUR PHASENSYNCHRONISIERUNG OPTISCHER RZ-DATENSIGNALE**
METHOD FOR SYNCHRONISING THE PHASE OF OPTICAL RETURN-TO-ZERO (RZ) DATA SIGNALS
PROCEDE DE SYNCHRONISATION EN PHASES DE SIGNAUX DE DONNEES OPTIQUES A RETOUR A ZERO (RZ)

(30) Priorität: 30.12.1999 DE 19963802
(43) Veröffentlichungstag der Anmeldung: 25.09.2002
(73) Patentinhaber: SIEMENS AKTIENGESELLSCHAFT, 80333 München (DE)
(72) Erfinder: GLINGENER, Christoph, 83620 Feldkirchen-Westerham (DE); GOTTWALD, Erich, 83607 Holzkirchen (DE)
(86) Internationale Anmeldenummer: PCT/DE2000/004545
(87) Internationale Veröffentlichungsnummer: WO 2001/050664

(56) Entgegenhaltungen:
- EP-A- 0 936 773
- EP-A- 1 059 758
- US-A- 5 050 167

## Beschreibung

Die Erfindung betrifft ein Verfahren zur Phasensynchronisierung synchroner optischer RZ-Datensignale.

Die Verwendung von RZ-Impulsen (return to zero) in optischen Weitverkehrssystemen ermöglicht gegenüber NRZ-Impulsen (not return to zero) eine Erhöhung der Bitrate oder eine beträchtliche Erhöhung (ungefähr Verdopplung) der regeneratorfreien Reichweite.

RZ-Sendeeinrichtungen werden häufig dadurch realisiert, daß das Licht einer Pulsquelle mittels eines elektrooptischen Modulators durchgeschaltet oder gesperrt wird. Da die Pulsbreite im Verhältnis zur Dauer eines unmodulierten Bits gering ist, können mehrere Datensignale zu einem Zeitmultiplexsignal zusammengefaßt werden. Bei sehr hohen Datenraten und mehreren RZ-Datensignalen müssen Laufzeitunterschiede und Laufzeitschwankungen, die beispielsweise durch Temparaturänderungen verursacht sind, kontinuierlich ausgeglichen werden.

Ein System zur optischen Übertragung zweier Datensignale durch Multiplexen von Return-To-Zero-Impulsfolgen ist aus dem US-Patent 5,786,918 bekannt. Der Phasenunterschied wird durch ein optisches Verzögerungsglied erreicht. Schwankende Laufzeiten zwischen den Impulsfolgen können nicht ausgeglichen werden.

Zum Zusammenfassen und Separieren zweier optischer Signale mit hohen Datenraten sind aus der DE 41 30 048 A1 optische Multiplexer und Demultiplexer bekannt.

In dem Patent US 5,050,167 sind Anordnungen zum Multiplexen und Demultiplexen von optischen Signalen beschrieben. Sendeseitig werden die Signale durch feste Verzögerungsglieder unterschiedlich verzögert und zu einem Zeitmultiplexsignal zusammengefaßt. Empfangsseitig wird durch das Zeitmultiplexsignals ein Phasenregelkreis gesteuert und sein Signal einem Demultipexer zugeführt, der an seinen Ausgängen die einzelnen Datensignale abgibt. Ein Multiplexen mit festen Verzögerungsgliedern ist jedoch bei extrem hohen Datenraten problematisch.

Aus der Patentanmeldung EP 1 059 758 A2 (Stand der Technick : .S.v. Artikel 54(3) EPÜ) eine optische Sendeeinrichtung bekannt bei der das Tastverhältnis und die gegenseitige Phasenlage von zwei Impulsfolgen geregelt wird. Zur Regelung der Phasenlage wird das optische Spektrum gemessen. Wie aus der Figur 10 hervorgeht, sind die Unterschiede zwischen den Spektren bei unterschiedlichen Phasenlagen relativ gering, so dass mehrere Messungen bei unterschiedlichen Wellenlängen im optischen Bereich durchgeführt werden müssen. Die Extremwerte sind hierbei nicht sonderlich ausgeprägt. Bei Wellenlängen Multiplexsystemen müssen außerdem für jeden Kanal Messungen bei unterschiedlichen Wellenlängenkanal durchgeführt werden.

Aufgabe der Erfindung ist es, ein einfaches Verfahren zur Phasensynchronisierung verschiedener RZ-Datensignale anzugeben.

Diese Aufgabe wird durch ein Verfahren gemäß Patentanspruch 1 gelöst.

Vorteilhafte Weiterbildungen der Erfindung sind in den Unteransprüchen gegeben.

Besonders vorteilhaft ist die einfache Gewinnung eines zuverlässigen Regelkriteriums und die einfache Realisierbarkeit des Verfahrens. Bereits die Verwendung eines Kriteriums reicht zuverlässig für eine Regelung aus. Durch die Verwendung eines weiteren Regelkriteriums kann die Regelgenauigkeit erhöht werden.

Das erfindungsgemäße Verfahren kann für 2, 4, 8 usw. RZ-Datensignale angewendet werden. Für Kanalzahlen, die keine Zweierpotenzen darstellen, können andere Spektralfrequenzen als Regelsignale gewonnen werden.

Die Erfindung wird anhand von zwei Ausführungsbeispielen näher erläutert.

Es zeigen:
Figur 1 zwei Zeitmultiplexsignale ohne und mit einer Phasenabweichung,
Figur 2 die Anwendung des Verfahrens für zwei Zeitmultiplexsignale,
Figur 3 die gewonnenen Regelsignale,
Figur 4 eine Anordnung zur Phasensynchronisierung von vier Zeitmultiplexsignalen und
Figur 5 eine Variante dieser Anordnung.

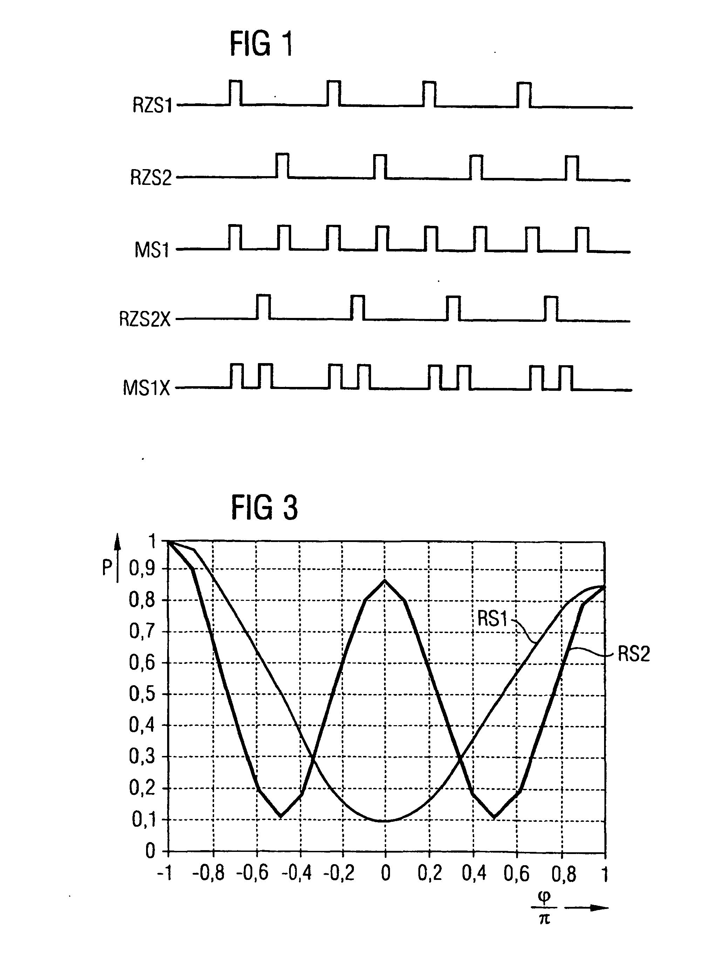

Das Zeitdiagramm in Figur 1 zeigt ein erstes RZ-Datensignal RZS1 und ein zweites RZ-Datensignal RZS2, dessen beispielsweise logische Einsen darstellende Impulse exakt um 180° gegenüber den Impulsen des ersten RZ-Datensignals RZS1 verschoben sind. Der Einfachheit halber wird angenommen, daß die Information nur aus logischen Einsen besteht; für beliebige Datenfolgen gelten entsprechende Betrachtungen.

Bei optimal synchronisierten RZ-Datensignale RZS1 und RZS2 werden zu einem Multiplexsignal MS1 mit der doppelten Impulse- bzw. Datenrate zusammengefaßt, dessen Impulsabstände genau gleich sind.

Weicht jedoch die Phasenverschiebung des zweiten RZ-Datensignals RZS2 von der Ideallage ab, so erhält man beispielsweise die Impulsfolge MS1 des Multiplexsignals. Die Spektralanteile beider Impulsfolgen MS1 und MS1 unterscheiden sich erheblich und werden daher als Regelsignale verwendet.

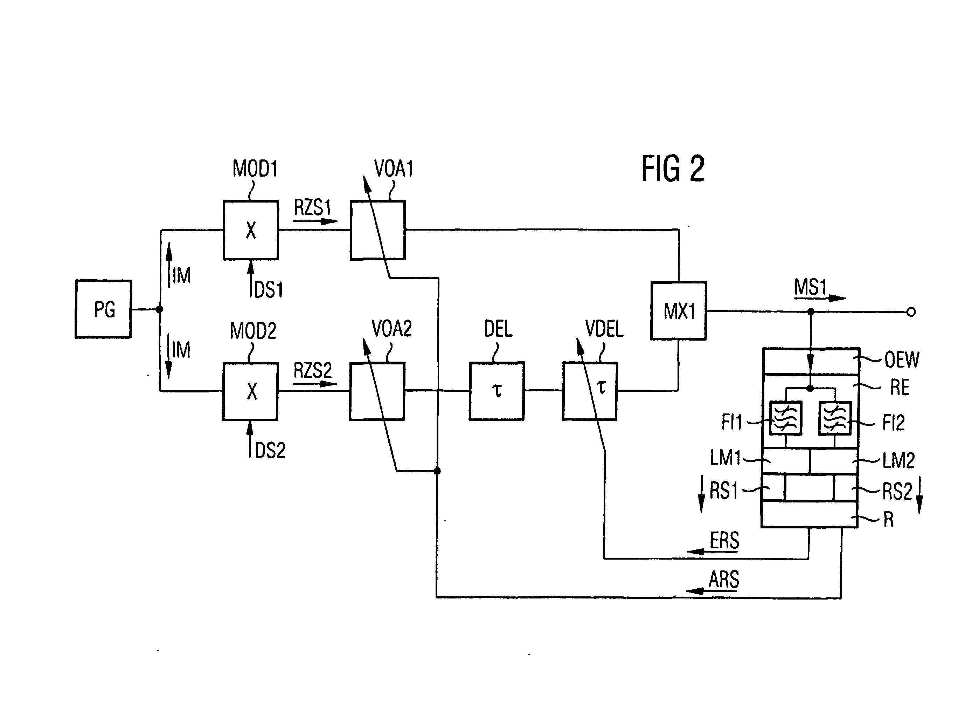

Figur 2 zeigt eine prinzipielle Anordnung zur Phasenregelung. Ein Pulsgenerator PG erzeugt eine optische Impulsfolge IM, die einem ersten Modulator MOD1 und einem zweiten Modulator MOD2 zugeführt werden. Dort werden die Impulse von Datensignalen DS1 und DS2 moduliert - hier durchgeschaltet oder unterdrückt, um die optische RZ-Datensignale RZS1 und RZS2 zu erzeugen. Das erste RZ-Datensignal RZS1 wird über ein erstes Dämpfungsglied VOA1 einem optischen Multiplexer MX1 zugeführt, während das zweite RZ-Datensignal RZS2 über ein Dämpfungsglied VOA2, ein festes Verzögerungsglied DEL und ein variables Verzögerungsglied VDEL dem Multiplexer MX1 zugeführt wird. Abhängig vom Einstellbereich des einstellbaren Verzögerungsglieds VDEL kann ggf. auf das Verzögerungsglied DEL verzichtet werden.

Einstellbare Verzögerungsglieder können als integrierte optische Bauelemente oder als Freistrahloptik realisiert werden.

Das aus beiden RZ-Datensignalen gebildete Multiplexsignal MS1 wird gegebenenfalls mit weiteren Multiplexsignalen zusammengefaßt und übertragen. Außerdem wird das Multiplexsignal (z. B. über einen Koppler) einer Regeleinrichtung RE zugeführt. Dort wird es durch einen optoelektrischen Wandler OEW in ein elektrisches Signal umgesetzt und einem ersten Filter FI1 zugeführt, das auf die Datenrate eines RZ-Datensignals RZS1, RZS2 abgestimmt ist. Es kann zusätzlich einem zweites Filter FI2 zugeführt werden, das auf die Datenrate des Multiplexsignals MS1 abgestimmt ist.

Nach der Filterung wird die Leistung der Ausgangssignale in Leistungsmessern LM1, LM2 gemessen, um entsprechende Regelsignale RS1 bzw. RS2 zu erhalten. Diese werden einem Regler R zugeführt, der ein Einstellsignal ERS erzeugt, das das Laufzeitglied VDEL optimal so einstellt, das die Impulsfolgen beider Datensignale gegeneinander um 180° phasenverschoben sind.

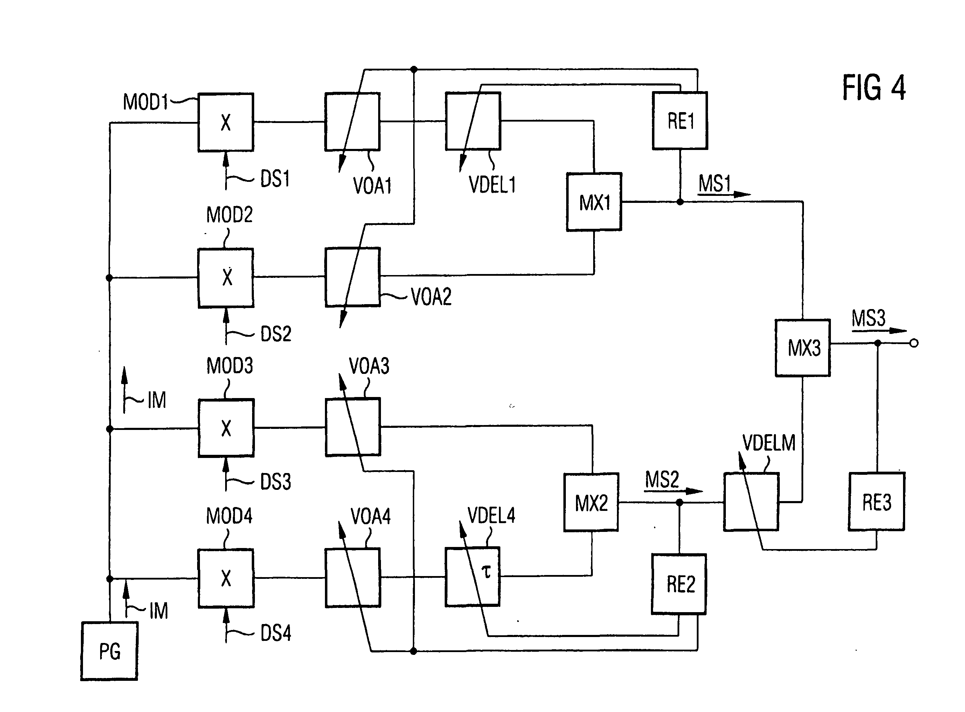

In Figur 3 sind die Hauptwerte der Regelsignale RS1 und RS2 als Funktion der Phasendifferenz ϕ/Π zwischen zwei RZ-Datensignalen dargestellt. Ähnliche Verläufe wiederholen sich periodisch. Es reicht aus, daß durch das einstellbare Laufzeitglied der Phasenunterschied so eingestellt wird, daß das erste Regelsignal RS1 sein Minimum erreicht. Zusätzlich kann dann das zweite Regelsignal RS2 auf ein Maximum eingestellt werden. Auch ist eine Überlagerung beider Regelsignale möglich, wobei ein Regelsignal ein umgekehrtes Vorzeichen aufweist und die Amplitude des zweiten Regelsignals RS2 soweit reduziert wird, daß sich kein lokales Minimum ergibt.

Das Regelverfahren kann darin bestehen, daß durch eine digitale Steuerung versuchsweise durch Änderung des Einstellsignals ERS das optische Verzögerungsglied VDEL verstellt wird und die Änderung des Regelsignals RS1 ausgewertet wird, worauf weitere Verstellungen erfolgen, bis das Leistungsminimum des Regelsignals RS1 erreicht ist. Ein anderes Verfahren kann darin bestehen, daß die Phase fortlaufend durch Wobbeln des Einstellsignals variiert wird und das Einstellsignal ERS durch Korrelation des Regelsignals RS1 mit dem Wobbelsignal nach dem Lock-In-Prinzip gewonnen wird.

Wenn die Amplituden beider RZ-Datensignale RZS1 und RZS2 ungleich sind, ergeben sich ebenfalls Abweichungen vom Minimum des Regelsignals RS1 bzw. Maximum des Regelsignals RS2. Das Verfahren kann deshalb in entsprechender Weise auch zum Einstellen der Amplituden verwendet werden. Dies erfolgt in Figur 2 mit Hilfe eines Amplituden-Regelsignals ARS, dem die selben Kriterien RS1 und RS2 zugrundeliegen. Bei mehr als zwei Datensignalen sollte jedoch ein fester Vergleichswert für alle RZ-Datensignale verwendet werden.

In Figur 4 ist eine Anordnung zur Erzeugung eines vier Datensignale DS1 bis DS4 enthaltenden Multiplexsignals MS3 in mit den entsprechenden Modulatoren MOD1 - MOD4 und Einstellgliedern VOA1 - VOA4, VDEL1, VDEL4, VDELM in vereinfachter Form dargestellt.

Jeweils zwei RZ-Datensignale RZS1 und RZS2 bzw. RZS3 und RZS4 werden zu einem Multiplexsignal MS1 bzw. MS2 zusammengefaßt. Die Regeleinrichtungen RE1 und RE2 bewirken jeweils das Zusammenfassen zweier RZ-Datensignale zu Zeitmultiplexsignalen MS1 und MS2. Diese werden über einen weiteren Multiplexer MX3 zu einem Multiplexsignal MS3 höherer Ordnung zusammengefaßt, wobei eine weitere Regeleinrichtung RE3 über das Verzögerungsglied VDELM für eine ideale Phasenlage beider Multiplexsignale MS1 und MS2 zueinander sorgt.

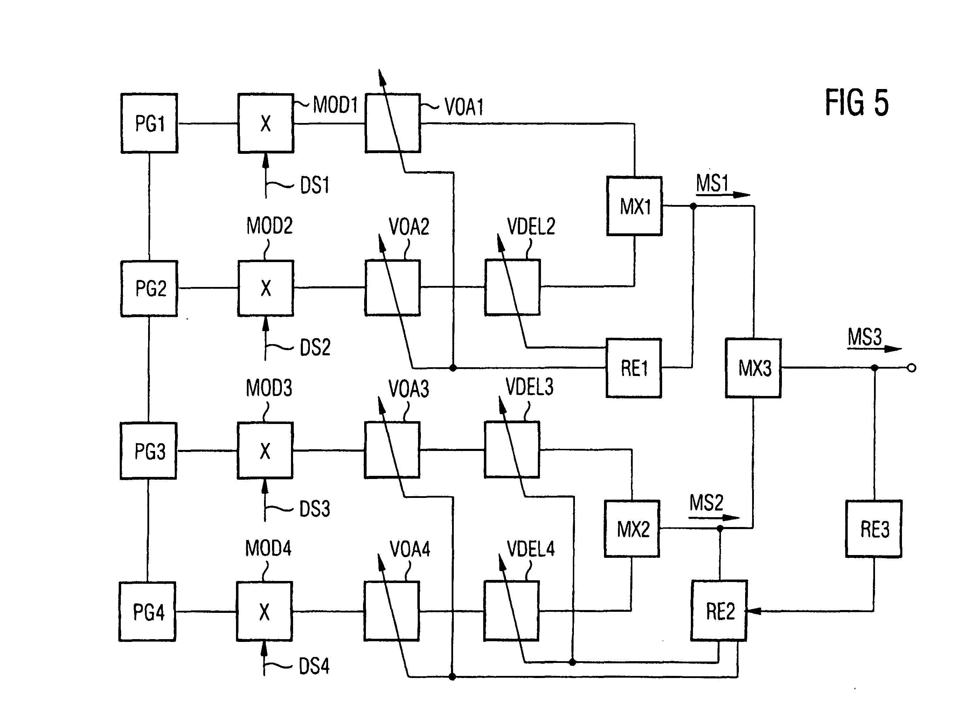

In Figur 5 ist eine Variante dargestellt, bei der in jedem Datenzweig bis auf den ersten ein steuerbares Verzögerungsglied VDEL2 bis VDEL4 eingefügt ist und die dritte Regeleinrichtung RE3 über die zweite Regeleinrichtung RE2 die Verzögerungsglieder VDEL3 und VDEL4 mit beeinflußt, so daß wiederum sämtliche RZ-Datensignale mit exakten Phasenlagen zusammengefügt werden. Hier liefern mehrere synchronisierte Pulsgeneratoren die Impulsfolgen.

Zu ergänzen ist noch, daß die Regelkriterien ebenso zum Einstellen von elektrischen Verzögerungsgliedern oder zum Synchronisieren von Pulsgeneratoren verwendet werden können, die in entsprechender Weise eine Phasenregelung ermöglichen.

### Bezugszeichenliste

- DS1: erstes (NRZ)-Datensignal
- DS2: zweites Datensignal
- RZS1: erstes RZ-Datenignal
- RZS2: zweites RZ-Datensignal
- MS1, MS2, MS3: Multiplexsignal
- PG: Pulsgenerator
- IM: optische Impulsfolge
- MOD1, MOD2,..: erster, zweiter Modulator
- MX1: erster optischer Multiplexer
- VOA1, VOA2,...: Dämpfungsglied
- DEL: Verzögerungsglied mit konst. Verzö.
- VDEL, VDEL1,: einstellb. optisches Verzögerungsgl.
- RE1, 2, ..: Regeleinrichtung
- ERS: Einstellsignal
- ARS: Amplituden-Einstellsignal
- FI1,: erstes Filter
- FI2: zweites Filter
- LM1, LM2: Leistungsmesser
- R: Regler
- OEW: opto-elektrischer Wandler
- P: Leistung bei der Datenrate von RZ+S1
- MX1, MX2, MX3 ...: Multiplexer

## Patentansprüche

1. Verfahren zur Phasensynchronisierung synchroner optischer RZ-Datensignale (RZS1, RZS2; ...), bei dem jeweils zwei der RZ-Datensignale (RZS1, DZS2) zu einem Multiplexsignal (MS1) zusammengefaßt werden und die Phasensynchronisierung zur Erzielung gleicher Impulsabstände aufgrund von Messungen spektraler Komponenten erfolgt,
**dadurch gekennzeichnet,**
**dass** das Multiplexsignal (MS1) **in ein elektrisches Signal** umgesetzt wird,
**daß** die spektrale Leistung des elektrischen Signals bei einer der Datenrate der RZ-Datensignale (RZS1, RZS2) entsprechenden Frequenz gemessen wird und
**daß** die Phasenverschiebung zwischen den beiden RZ-Datensignalen (RZS1, RZS2) so geregelt wird, daß die gemessene Leistung ein Minimum erreicht.

2. Verfahren nach Anspruch 1,
**dadurch gekennzeichnet,**
**daß** zusätzlich eine Messung der spektralen Leistung des elektrischen Signals bei einer Frequenz erfolgt, die der Datenrate des Multiplexsignals (MS1) entspricht, und
**daß** die Phasenverschiebung zwischen den beiden RZ-Datensignalen (RZS1, RZS2) so geregelt wird, daß die Leistung bei dieser Frequenz ein lokales Maximum erreicht.

3. Verfahren nach Anspruch 1,
**dadurch gekennzeichnet,**
**daß** mindestens jeweils eines der beiden optischen RZ-Datensignale (RZS1, RZS2) über ein einstellbares Verzögerungsglied (VDEL) geführt wird um sie dann zu dem, Multiplexsignal (MS1) zusammenzufassen,
**daß** das in ein elektrisches Signal umgesetzte Multiplexsignal (MS1) einem ersten Filter (FI1) zugeführt wird,
dessen Durchlaßfrequenz der Datenrate eines der beiden RZ-Datensignale (RZS1, RZS2) entspricht,
**daß** durch Messung der Leistung ein erstes Regelsignal (RS1) gewonnen wird und
**daß** durch Einstellen des Verzögerungsgliedes (VDEL) die Phasenverschiebung zwischen den beiden RZ-Datensignalen (RZS1, RZS2) so geregelt wird, daß die Leistung des erstes Regelsignals (RS1) ein Minimum erreicht.

4. Verfahren nach Anspruch 2 oder 3,
**dadurch gekennzeichnet,**
**daß** das in ein elektrisches Signal umgesetzte Multiplexsignal (MS1) einem zweiten Filter (FI2) zugeführt wird, dessen Durchlaßfrequenz der Datenrate des Multiplexsignals (MS1) entspricht,
**daß** durch Leistungsmessung ein zweites Regelsignal (RS2) gewonnen wird und
**daß** die Phasenverschiebung zwischen den beiden RZ-Datensignalen (RZS1, RZS2) so geregelt wird, daß die Leistung des zweiten Regelsignals (RS2) bei einem zumindest annähernden Minimum des ersten Regelsignals (RS1) ein lokales Maximum erreicht.

5. Verfahren nach Anspruch 4,
**dadurch gekennzeichnet,**
**daß** durch Überlagerung der beiden Regelsignale (RS1, RS2) ein einziges Regelsignal (ERS) gebildet wird.

6. Verfahren nach einem der vorhergehenden Ansprüche,
**dadurch gekennzeichnet,**
**daß** jeweils zwei der RZ-Datensignale (RZS1, RZS2) zu **jeweils** einem Multiplexsignal (MS1, MS2) und jeweils zwei Multiplexsignale (MS1, MS2) zu einem Multiplexsignal (MS3) höherer Ordnung zusammengefaßt werden, und daß für jeweils zwei der RZ-Datensignale oder zwei der Multiplexsignale (MS1, MS2) eine Regeleinrichtung (RE1, RE2, RE3) vorgesehen ist.

7. Verfahren nach einem der vorhergehenden Ansprüche,
**dadurch gekennzeichnet,**
**daß** die Amplituden der beiden RZ-Datensignale (RZS1, RZS2) so geregelt werden, daß die Leistung bei der Frequenz, die der Datenrate eines der beiden RZ-Datensignale (RZS1, RZS2) entspricht, ein Minimum erreicht und gegebenenfalls zusätzlich so geregelt wird, daß die Leistung bei der Frequenz, die der Datenrate des Multiplexsignals (MS1) entspricht, ein lokales Maximum erreicht.

8. Verfahren nach einem der vorhergehenden Ansprüche,
**dadurch gekennzeichnet,**
**daß** die Regelung mit Hilfe von Wobbelsignalen nach dem Lock-In-Prinzip erfolgt.

9. Verfahren nach Anspruch 7 oder 8,
**dadurch gekennzeichnet,**
**daß** abwechselnd die Phasenlage oder die Amplituden abgeglichen werden oder eine Optimierung durch unterschiedliche Lock-In-Regelschleifen durchgeführt wird.

10. Verfahren nach einem der vorhergehenden Ansprüche,
**dadurch gekennzeichnet,**
**daß** die Trägerfrequenzen der RZ-Datensignale (RZS1, RZS2) zur Vermeidung von störenden Interferenzen variiert werden.

## Claims

1. Method for synchronizing the phase of synchronous optical RZ data signals (RZS1, RZS2; ...), in which in each case two of the RZ data signals (RZS1, RZS2) are combined to form a multiplex signal (MS1) and the phase synchronization is carried out to achieve the same pulse intervals based on measurements of spectral components,
**characterized**
**in that** the multiplex signal (MS1) is converted into an electrical signal,
**in that** the spectral power of the electrical signal is measured at a frequency corresponding to the data rate of the RZ data signals (RZS1, RZS2), and
**in that** the phase shift between the two RZ data signals (RZS1, RZS2) is controlled such that the measured power reaches a minimum.

2. Method according to Claim 1, **characterized in that** in addition the spectral power of the electrical signal is measured at a frequency that corresponds to the data rate of the multiplex signal (MS1), and **in that** the phase shift between the two RZ data signals (RZS1, RZS2) is controlled such that the power reaches a local maximum at this frequency.

3. Method according to Claim 1, **characterized in that** at least in each case one of the two optical RZ data signals (RZS1, RZS2) is guided via an adjustable time-delay element (VDEL) in order to then combine them to form the multiplex signal (MS1),
**in that** the multiplex signal (MS1) converted into an electric signal is fed to a first filter (FI1), whose transmission frequency corresponds to the data rate of one of the two RZ data signals (RZS1, RZS2),
**in that** a first control signal (RS1) is obtained by measuring the power, and
**in that** the phase shift between the two RZ data signals (RZS1, RZS2) is controlled, by adjusting the time-delay element (VDEL), such that the power of the first control signal (RS1) reaches a minimum.

4. Method according to Claim 2 or 3, **characterized in that** the multiplex signal (MS1) converted into an electrical signal is fed to a second filter (FI2) whose transmission frequency corresponds to the data rate of the multiplex signal (MS1),
**in that** a second control signal (RS2) is obtained by power measurement, and
**in that** the phase shift between the two RZ data signals (RZS1, RZS2) is controlled such that the power of the second control signal (RS2) reaches a local maximum at an at least approximate minimum of the first control signal (RS1).

5. Method according to Claim 4, a single control signal (ERS) is formed by overlapping the two control signals (RS1, RS2).

6. Method according to one of the preceding claims, **characterized in that** in each case two of the RZ data signals (RZS1, RZS2) are combined to form in each case a multiplex signal (MS1, MS2), and in each case two multiplex signals (MS1, MS2) are combined to form a multiplex signal (MS3) of higher order, and **in that** a control device (RE1, RE2, RE3) is provided for in each case two of the RZ data signals or two of the multiplex signals (MS1, MS2).

7. Method according to one of the preceding claims, **characterized in that** the amplitudes of the two RZ data signals (RZS1, RZS2) are controlled such that the power reaches a minimum at the frequency that corresponds to the data rate of one of the two RZ data signals (RZS1, RZS2) and, where appropriate, is additionally controlled such that the power reaches a local maximum at the frequency that corresponds to the data rate of the multiplex signal (MS1).

8. Method according to one of the preceding claims, **characterized in that** the control is performed using the lock-in principle with the aid of sweep signals.

9. Method according to Claim 7 or 8, **characterized in that** the phase angle or the amplitudes are alternately adjusted, or an optimization is carried out by means of different lock-in control loops.

10. Method according to one of the preceding claims, **characterized in that** the carrier frequencies of the RZ data signals (RZS1, RZS2) are varied in order to avoid disturbing interference.

## Revendications

1. Procédé de synchronisation de phases de signaux de données RZ (RZS1, RZS2, ...) optiques synchrones, dans lequel respectivement deux des signaux de données RZ (RZS1, RZS2) sont regroupés en un signal de multiplexage (MS1) et la synchronisation de phases se produit pour obtenir de mêmes intervalles d'impulsions sur la base de mesures de composantes spectrales, **caractérisé en ce que** le signal de multiplexage (MS1) est converti en un signal électrique, **en ce que** la puissance spectrale du signal électrique est mesurée à une fréquence correspondant au débit de données des signaux de données RZ (RZS1, RZS2) et **en ce que** le décalage de phase entre les deux signaux de données RZ (RZS1, RZS2) subit un réglage tel que la puissance mesurée atteint un minimum.

2. Procédé selon la revendication 1, **caractérisé en ce que** se produit additionnellement une mesure de la puissance spectrale du signal électrique à une fréquence qui correspond au débit de données du signal de multiplexage (MS1) et **en ce que** le décalage de phase entre les deux signaux de données RZ (RZS1, RZS2) subit un réglage tel que la puissance à cette fréquence atteint un maximum local.

3. Procédé selon la revendication 1, **caractérisé en ce qu'**au moins respectivement l'un des deux signaux de données RZ (RZS1, RZS2) optiques passe par un organe de retard ajustable (VDEL) pour ensuite être regroupés en le signal de multiplexage (MS1), **en ce que** le signal de multiplexage (MS1) converti en un signal électrique est amené à un premier filtre (FI1) dont la fréquence de passage correspond au débit de données de l'un des deux signaux de données RZ (RZS1, RZS2), **en ce qu'**on obtient un premier signal de réglage (RS1) par mesure de la puissance et **en ce que** le décalage de phase entre les deux signaux de données RZ (RZS1, RZS2) est réglé par ajustement de l'organe de retard (VDEL) de manière telle que la puissance du premier signal de réglage (RS1) atteint un minimum.

4. Procédé selon la revendication 2 ou 3, **caractérisé en ce que** le signal de multiplexage (MS1) converti en un signal électrique est amené à un deuxième filtre (FI2) dont la fréquence de passage correspond au débit de données du signal de multiplexage (MS1), **en ce qu'**on obtient un deuxième signal de réglage (RS2) par mesure de la puissance et **en ce que** le décalage de phase entre les deux signaux de données RZ (RZS1, RZS2) subit un réglage tel que la puissance du deuxième signal de réglage (RS2) atteint un maximum local pour un minimum au moins approximatif du premier signal de réglage (RS1).

5. Procédé selon la revendication 4, **caractérisé en ce qu'**un unique signal de réglage (ERS) est constitué par superposition des deux signaux de réglage (RS1, RS2).

6. Procédé selon l'une des revendications précédentes, **caractérisé en ce que** respectivement deux des signaux de données RZ (RZS1, RZS2) sont regroupés en respectivement un signal de multiplexage (MS1, MS2) et respectivement deux signaux de multiplexage (MS1, MS2) sont regroupés en un signal de multiplexage (MS3) d'ordre supérieur et **en ce qu'**est prévu un équipement de réglage (RE1, RE2, RE3) pour respectivement deux des signaux de données RZ ou deux des signaux de multiplexage (MS1, MS2).

7. Procédé selon l'une des revendications précédentes, **caractérisé en ce que** les amplitudes des deux signaux de données RZ (RZS1, RZS2) subissent un réglage tel que la puissance atteint un minimum à la fréquence qui correspond au débit de données de l'un des deux signaux de données RZ (RZS1, RZS2) et subit additionnellement, le cas échéant, un réglage tel que la puissance atteint un maximum local à la fréquence qui correspond au débit de données du signal de multiplexage (MS1).

8. Procédé selon l'une des revendications précédentes, **caractérisé en ce que** le réglage se fait à l'aide de signaux de vobulation selon le principe du «lock in».

9. Procédé selon la revendication 7 ou 8, **caractérisé en ce que** la position de phase ou les amplitudes sont égalisées en alternance ou qu'une optimisation est effectuée par différentes boucles de réglage «lock in».

10. Procédé selon l'une des revendications précédentes, **caractérisé en ce qu'**on fait varier les fréquences porteuses des signaux de données RZ (RZS1, RZS2) pour éviter des interférences parasites.
